# EUROPEAN PATENT APPLICATION

(11) **EP 2 011 561 A1**
(43) Date of publication of application: **07.01.2009**
(21) Application number: 07708075.2
(22) Date of filing: 06.02.2007
(51) Int. Cl.: B01D 63/08, B01D 63/00

(54) **MEMBRANE ELEMENT, MEMBRANE UNIT AND MULTISTAGE MEMBRANE UNIT**

(30) Priority: 27.03.2006 JP 2006085201; 21.04.2006 JP 2006117580; 21.04.2006 JP 2006117581
(71) Applicant: TORAY INDUSTRIES, INC., Tokyo 103-8666 (JP)
(72) Inventor: SAKAI, Kenji, Otsu-shi Shiga 520-0803 (JP); KANAMORI, Hiromitsu, Kusatsu-shi Shiga 525-0072 (JP); ODAKA, Yoshifumi, Otsu-shi Shiga 520-0842 (JP); ONOE, Toshitsugu, Otsu-shi Shiga 520-2145 (JP); MATSUMOTO, Hiroshi, Kyoto-shi Kyoto 607-8088 (JP)
(74) Representative: Hager, Thomas Johannes
(86) International application number: PCT/JP2007/051957
(87) International publication number: WO 2007/122839

(57) **Abstract**

Provided are membrane elements and membrane units capable of easily forming a space part surrounded with a frame body above the membrane elements regardless of the number of the membrane elements. That is, the membrane elements are membrane elements each comprising filtering membranes on both surfaces of a plate-like supporting plate, wherein spacer parts are formed in both side parts for keeping the membrane face distance to adjacent membrane elements being prescribed intervals, and the spacer parts have through bolt insertion holes and are extended upward from the upper end part of the supporting plate. The membrane units are configured by arranging a plurality of the membrane elements in such a manner that the channel parts formed in the spacer parts are brought into contact with each other, seal panels are installed in the outermost parts of the arranged membrane elements, and a frame body is formed by surrounding the space above the filtering membranes by the spacer parts and the seal panels.

## Description

### TECHNICAL FIELD

The invention relates to a membrane unit and a membrane element suitable to be used as a membrane filtration apparatus particularly for wastewater treatment and water purification treatment.

### BACKGROUND ART

As a membrane separation technique to be applied for wastewater treatment has been known a technique of obtaining membrane-filtered water by immersing a membrane unit in which a plurality of membrane elements are arranged and inserted in a treatment tank filled with wastewater such as activated sludge and by suctioning the filtered water side of the membrane unit by a pump, or discharging water based on the water level difference just like a siphon.

In the case of activated sludge process, to propagate aerobic microorganism in the treatment tank, air diffusion to the tank is required. If an apparatus for air diffusion is installed down below a membrane unit, the gas-liquid mixing flow by the air diffusion can ascend in the membrane unit and scrape contamination of the membrane surfaces (membrane faces). As a result, solid-liquid separation can be carried out while the cleaning of the membrane surface is carried out, and thus the membrane filtration operation can be carried out at a low cost.

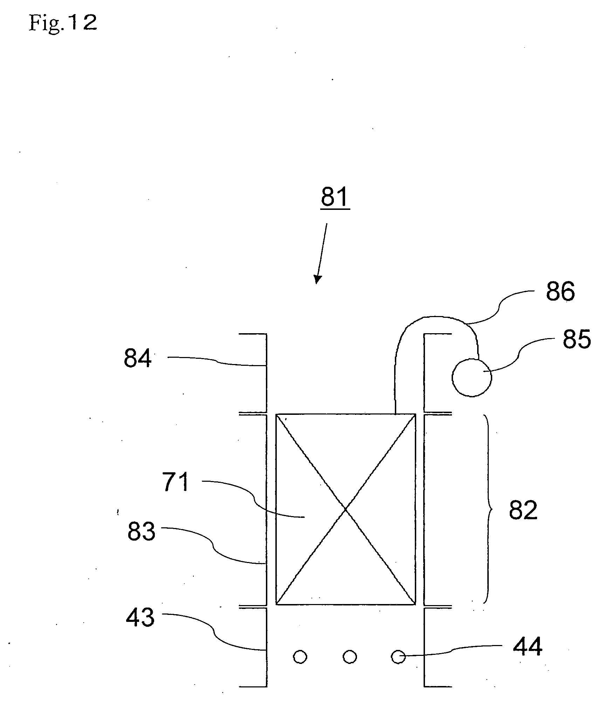

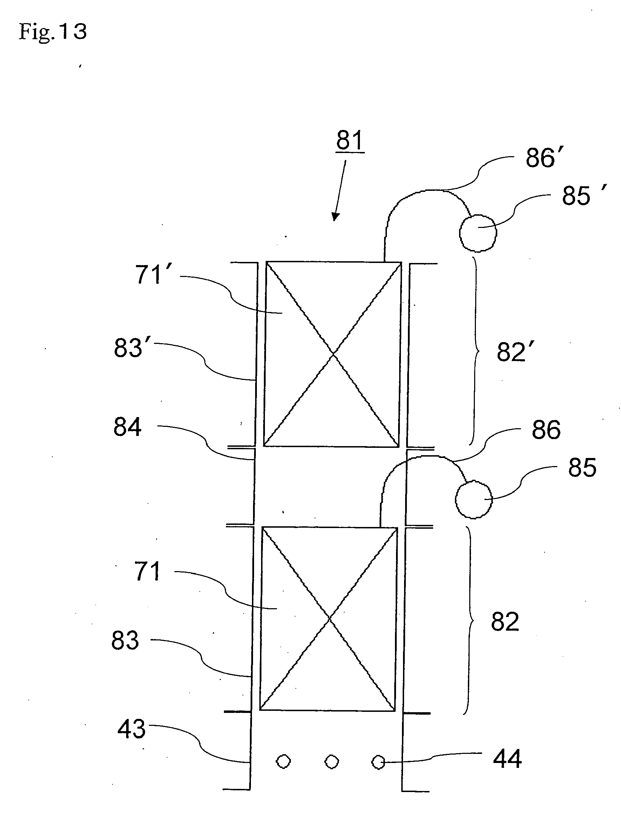

At that time, if the velocity of the gas-liquid mixing flow for scraping the membrane surfaces is high, stable operation can be continued. As means for increasing the velocity of the gas-liquid mixing flow, as shown in Fig. 12, has been proposed a method for efficiently generating ascending water current by installing a box-like upper housing 84 on an upper part of a box-like housing 83 containing membrane elements 71 composing a membrane unit (see Patent Document 1). Further, as shown in Fig. 13, it has also been proposed to use air efficiently by mounting another membrane unit 82' on a box-like upper housing 84 mounted on a membrane unit 82 and supplying the gas-liquid mixing flow with increased velocity to the upper membrane unit 82' (see Patent Document 2). Furthermore, to increase the cleaning power by making the gas-liquid mixing flow high speed, it is also preferable to increase the quantity of air to be diffused from the lower side of a membrane unit.

Further, in order to carry out membrane filtration operation stable, it is also important to keep the intervals of raw water channels formed between respective membrane elements constant, and for example, a membrane unit obtained by setting a plurality of membrane elements having projected parts (spacer parts) in the circumferential rim parts in a casing while bringing the spacer parts of adjacent membrane elements into contact with each other has been also disclosed (see Patent Document 3). Accordingly, a gas-liquid mixing flow can be evenly sent close to the membrane surface of each membrane element, and the membrane surface of each membrane element can be washed evenly.

However, in the above-mentioned techniques described in Patent Documents 1 and 2, in order to increase the velocity of the gas-liquid mixing flow, it is required to install the housing, being an additional member, on the upper parts of membrane element. As the membrane unit, since the membrane elements are contained in a housing 83 with a size corresponding to a desired number of membrane elements, it is also required to adjust the size of the housing 84 depending on the size of the housing 83. That is, it is required to produce upper housings 84 with various sizes depending on the number of membrane elements, and thus there is a problem regarding the efficiency in terms of the apparatus production. Further, if the velocity of the gas-liquid mixing flow is further increased, the pulsation becomes intense and therefore a preferable state for removing contaminations from the filtering membrane surfaces 71 is produced. On the other hand, an excess load is applied to the membrane elements 71, and therefore, the displacement of membrane elements tends to occur. Furthermore, a supporting plate bends considerably and tends to deform, the spacer parts move slightly, and thus a problem of causing wear tends to occur.

The method of increasing an air amount is a preferable for removing contaminations of the filtering membrane surface because of a strenuous pulsation. On the other hand, since an excess load is applied to the supporting plate of the membrane element, the displacement of the membrane elements tends to occur. Furthermore, the supporting plate bends considerably and tends to deform, the spacer parts move slightly, and thus a problem of causing wear tends to occur. Furthermore, in a case where the membrane unit apparatus in which intervals of the raw water channels are kept constant by bringing the above-mentioned spacer parts into contact with each other, there is a problem that the intervals of the raw water channels of membrane faces are easily fluctuated due to vibration of the membrane elements generated during the operation.

In order to prevent the displacement of the membrane elements even if a load is applied due to the high velocity gas-liquid mixing flow in an immersion tank and keep the intervals of the membrane surfaces constant, it has been also proposed that a membrane unit is assembled by arranging a plurality of membrane elements having spacer parts in both right and left sides of supporting plates in such a manner that the spacer parts are brought into contact with each other and uniting the membrane elements by inserting through bolts into holes formed in the supporting plates (see Patent Document 4). In the case of this membrane unit, in order to prevent slight movement wear in the contacting spacer parts, the through bolts 45 have to be fastened to make the fastening force of the contacting spacer parts higher than the force applied to the supporting plates, and then the slight movement of the spacer parts can be prevented.
However, with the membrane unit structure described in that document, if the through bolts are fastened firmly, particularly the supporting plates themselves of membrane elements at the outside positions bends considerably to result in a problem that the supporting plates are broken or the spacer parts cannot be brought into contact since the fastening positions of the spacer parts and the through bolts are apart, and the slight movement wear is further promoted.
Patent Document 1: Japanese Patent No. 3290577
Patent Document 2: Japanese Patent No. 3667131
Patent Document 3: Japanese Utility Model Application Laid-Open No. 6-60427
Patent Document 4: Japanese Patent Application Laid-Open (JP-A) No. 8-89765

### DISCLOSURE OF THE INVENTION

### Problems to be solved by the Invention

An object of the invention is to solve the above-mentioned problems and provide a membrane element, a membrane unit, and a multi-deck membrane unit with which a space part surrounded with a frame body can easily be installed above the membrane element regardless of a number of the membrane element and wear of spacer parts can be suppressed. Another object of the invention is to provide a membrane element, a membrane unit, and a multi-deck membrane unit with which air supplied from the lower part of the membrane element can efficiently be utilized and the efficiency in terms of an apparatus production can be improved.

### Means for Solving the Problems

In order to accomplish the objects, the invention includes the following configuration. That is:
(1) a membrane element comprising filtering membranes on both surfaces of a plate-like supporting plate, wherein spacer parts are formed at both side parts of the membrane element for keeping prescribed distance to the surface of an adjacent membrane element, and the spacer parts have through bolt insertion holes and are extended upward from the upper end part of the supporting plate;
(2) The membrane element according to (1), wherein the through bolt insertion holes are U-shape holes opened to the side face of the membrane element and penetrating form the front surface to the rear surface of the membrane element;
(3) The membrane element according to (1) or (2), wherein projection part for fitting and reception part for fitting are formed in the spacer part for positioning with an adjacent membrane element;
(4) The membrane element according to any one of (1) to (3), wherein a channel part having a through hole for forming a water collecting pipe is formed in the upper part of the spacer part and the through hole in the channel part and the inside of a filtered water chamber formed by the filtering membranes disposed on both surfaces of the supporting plate are communicated;
(5) A membrane unit having a plurality of membrane elements according to any one of (1) to (4) arranged in such a manner that the spacer parts are brought into contact with each other, seal panels are installed to outermost parts of the arranged membrane elements, and a frame body surrounding the space above the filtering membranes is formed by the spacer parts and the seal panels;
(6) A membrane unit comprising a plurality of membrane elements according to (2) arranged in such a manner that the spacer parts are brought into contact with each other, and seal panels having through bolt insertion holes are installed to the outermost parts of the arranged membrane elements, wherein the membrane elements and the seal panels are united by inserting through bolts into the U-shape holes of the membrane elements and the through bolt insertion holes of the seal panels;
(7) A membrane unit comprising a plurality of membrane elements according to (4) arranged in such a manner that the channel parts formed in the spacer parts are brought into contact with each other, seal panels are installed to the outermost parts of the arranged membrane elements, a frame body surrounding the space above the filtering membranes is formed by the spacer parts and the seal panels, and a water collecting pipe is formed by bringing a plurality of the channel parts into contact with one another;
(8) A multi-deck membrane unit comprising the membrane unit apparatus according to any one of (5) to (7) layered vertically in multi-decks.

In this invention, phrases such as "both side parts", "upper end part", "above", "side face", "outermost part" and the like are determined on the basis of the state at the time of use.

### Effects of the Invention

Since the spacer parts in both right and left sides are extended above the upper end part of the supporting plate, a plurality of the membrane elements of the invention can be arranged in such a manner that the distances of raw water channels to be formed between the respective membrane elements are kept constant by bringing the spacer parts into contact with one another; and further, a membrane unit without requiring an additional housing and a frame body surrounding the space above the filtering membranes can be formed by bringing the seal panels into contact with one another. According to the invention, regardless of the number of the membrane elements and the size of the membrane units, a space can reliably be kept above the membrane elements. Accordingly, air supplied from the lower part of the membrane units can be efficiently utilized for scraping the contaminations on the membrane surfaces (membrane faces) and stable membrane filtration operation is made possible. Further, without installing an upper housing according to prior arts, the membrane unit can be easily layered in multi-decks and it is advantageous in terms of the cost, and the space shape between upper and lower decks is always kept constant and controlled gas-liquid mixing flow can be efficiently utilized. In addition, the vibration of spacer parts due to pulsation is suppressed and wear is decreased by inserting through bolts into the through bolt insertion holes of the spacer parts and fastening a plurality of the membrane elements. In this case, the through bolts do not interrupt the gas-liquid mixing flow.

In the case where holes for through bolt insertion penetrate from the front surface to the rear surfaces of membrane elements and are U-shape holes opened to the side face of the membrane elements, through bolts can be easily inserted even in that state that several tens to a hundred and several tens of the membrane elements are layered. In the case where the projection part for fitting and reception part for fitting for positioning with an adjacent membrane element are formed in the spacer parts, the membrane elements can be easily and evenly layered. Further, in the case of membrane elements having channel parts in the upper parts of the spacer parts, the membrane unit is configured by arranging a plurality of the membrane elements while bringing the channel parts into contact with one another and also bringing the seal panels into contact with one another, so that the water collecting pipe for taking filtered water out can be formed in the upper part of the membrane unit. As a result, a tube for taking out filtered water is not necessary and thus the membrane unit can be easily multi-layered without particular work (e.g. formation of through holes for leading a tube to the outside of a module) of the wall parts forming the space parts above the membrane elements.

### BRIEF DESCRIPTION OF DRAWINGS

Fig. 1 is a schematic perspective view showing one embodiment of a membrane element of the invention and a drawing showing the state before installation of filtering membranes.
Fig. 2 is a schematic perspective view showing one embodiment of a membrane module produced by combining a membrane unit using the membrane element shown in Fig. 1 with an air diffuser.
Fig. 3 is a schematic top view showing the upper face of the membrane unit shown in Fig. 2.
Fig. 4 is a schematic perspective view showing another embodiment of a membrane element of the invention and showing the state before installation of filtering membranes.
Fig. 5 is a partial cross-sectional view schematically showing magnified projection parts for fitting and reception parts for fitting formed in a spacer part.
Fig. 6 is a schematic drawing of a membrane element having channel parts in the upper part (extended part) of a spacer part.
Fig. 7 is a schematic perspective view showing one embodiment of a membrane module produced by combining a membrane unit using the membrane element shown in Fig. 6 with an air diffuser.
Fig. 8 is a schematic drawing showing an integration method of the membrane elements and the seal panels.
Fig. 9 is a schematic perspective view showing one embodiment of a membrane module produced by layering the membrane unit shown in Fig. 7 in two decks.
Fig. 10 is a schematic cross-sectional view of the membrane module shown in Fig. 9.
Fig. 11 is a schematic cross-sectional view schematically showing a water treatment apparatus using the membrane unit of the invention.
Fig. 12 is a schematic cross-sectional view schematically showing one example of conventional membrane modules.
Fig. 13 is a schematic cross-sectional view schematically showing another example of conventional membrane modules.

### Explanation of Symbols

1. element
11. filtering membrane
12. supporting plate
13. spacer part
14. through bolt insertion hole
15. extended part (upward extended part of spacer part)
16. collecting groove
17. filtered water outlet18. communicating hole
21. projection for fitting
22. reception for fitting
23. rib
31. channel part
32. through hole for forming a water collecting pipe
41. membrane module
42. membrane unit
43. stand
44. air diffuser
45. seal panel
46. through bolt
47. lower frame body
48. frame body
49. space part
50. nut
51. raw water channel
52. hole part
53. collecting cap
61. water to be treated
62. air supply pipe
63. treatment tank
64. suction pump
71, 71': conventional membrane element
81: conventional membrane module
82, 82': conventional membrane unit
83, 83': housing storing membrane element
84: upper housing
85, 85': collecting pipe
86, 86': tube for taking filtered water out

### BEST MODE FOR CARRYING OUT OF THE INVENTION

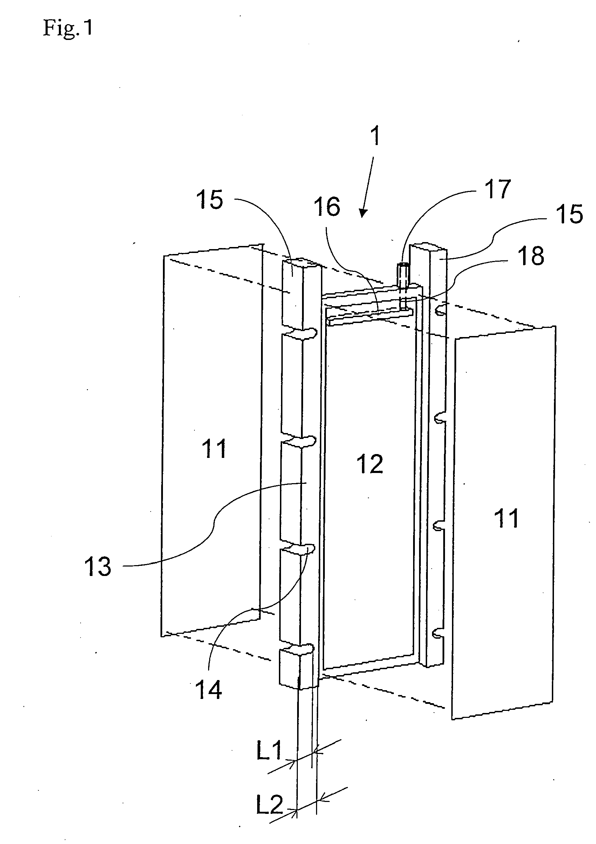

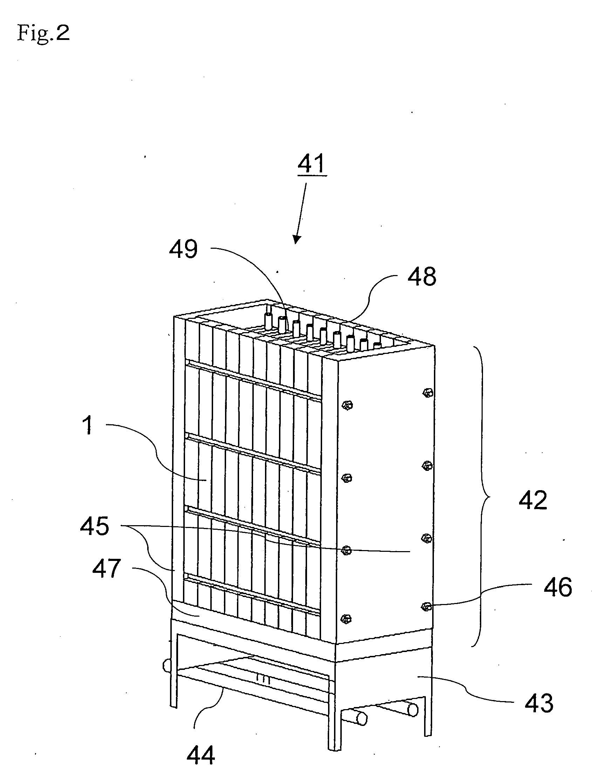

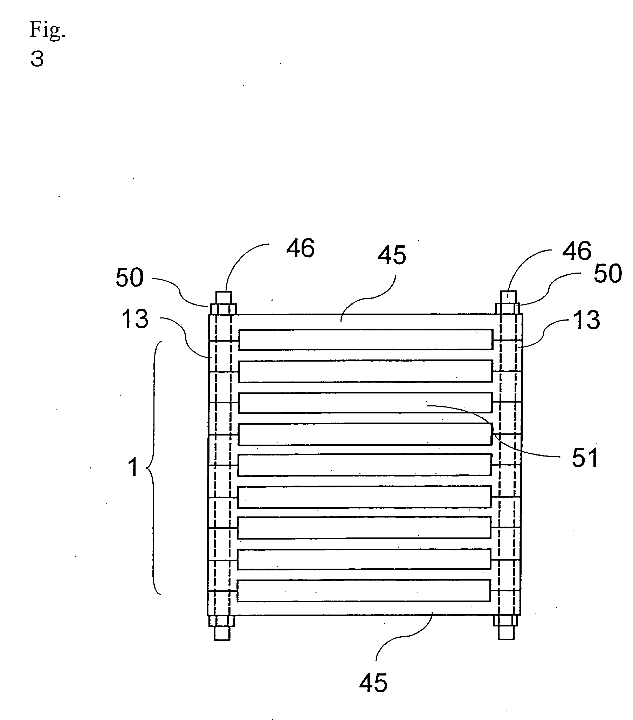

Hereinafter, the invention will be described in detail with reference to drawings of embodiments of the invention. Fig. 1 is a schematic perspective view showing one embodiment of a membrane element of the invention and showing the state before filtering membranes 11 are attached to the supporting plate 12. Fig. 2 is a schematic perspective view showing one embodiment of a membrane module 41 produced by combining a membrane unit 42 using the membrane element 1 with an air diffuser. Fig. 3 is a schematic top view showing the top face of the membrane unit 41.

The membrane element 1 shown in Fig. 1 is configured by installing the filtering membranes 11 on both surfaces of the plate-like supporting plate 12, and spacer parts 13 for keeping the prescribed distance to an adjacent membrane element are formed in both right and left sides (end parts in the horizontal direction of the membrane elements) of the supporting plate 12. The spacer parts 13 are thicker than the supporting plate and are extended upward higher than the upper end part of the supporting plate (the upward extended parts are called as extended parts 15).

A nozzle-like filtered water outlet 17 is at the upper end part of the supporting plate 12. On the other hand, sheet-like filtering membranes 11 are installed on both front and rear surfaces of the supporting plate 12, and a filtered water flowing space (filtered water chamber) is formed in the inside of the filtering membranes. The filtered water outlet 17 is connected to the filtered water chamber between the filtering membranes 11 and the supporting plate 12 via a channel 18. The filtered water flowing into the filtered water chamber after filtered from the outside of the filtering membranes 11 is discharged out of the filtered water outlet 17 via the channel 18.

The supporting plate 12 is not particularly limited as long as it is an approximately flat plate-like one. A material for that is not particularly limited as long as it is a material having toughness equivalent to a bending elastic modulus of about 300 MPa according to ASTM testing method D790 (2003); however, metals such as stainless steels, resins such as acrylonitrile-butadiene-styrene rubber (ABS resin) and vinyl chloride, composite materials such as fiber-reinforced resin (FRP), and other materials may be properly selected and used.

The spacer parts 13 are thick parts installed at both side parts of the supporting plate 12, and as shown in Fig. 3, raw water channels 51 are formed between filtering membranes of the adjacent membrane elements 1 by these spacer parts 13. Therefore, the thickness of the spacer parts 13 is set in accordance with the width of the raw water channels 51. The width of the raw water channels 51 is not particularly limited; however, it is preferably set to adjust the flow speed of the raw water flowing in the raw water channels 51 to be 0.1 to 1.5 m/s.

In the spacer parts 13, through bolt insertion holes 14 are formed. As shown in Fig. 2 and Fig. 3, a plurality of the membrane elements 1 are fastened and fixed by inserting through bolts 46 in the through bolt insertion holes 14 to keep the raw water channels 51 between the respective elements constant and uniform gas-liquid mixing flow can be led to the spaces between respective membrane elements. Further, since the spacer parts of adjacent membrane elements are firmly fastened, even if pulsations are generated due to high speed gas-liquid mixing flow, wear of the spacer parts 13 and damage of the supporting plate 12 can be prevented.

The shape of the through bolt insertion holes 14 being formed in the spacer parts 13 is not particularly limited and may be determined corresponding to the fastening force required for the spacer parts. However, as shown in Fig. 1, if they are made to be U-shape holes opened to the side face of the membrane elements and penetrating form the front surface to the rear surfaces of the membrane elements, through bolts 46 can be inserted into the layered membrane elements from the sides and thus the work is made easy and accordingly, it is preferable. Further, it is preferable that the depth of the U-shape is equal to or more than the diameter of the through bolts 46 and the through bolts 46 be entirely put in the U-shape holes. The depth of the U-shape is a length in the horizontal direction and in the plane direction of the membrane elements and is the length between the most projected point and the most recessed point in the spacer parts, and it is shown as L1 in Fig. 1.

Further, the number and the size of the through bolt insertion holes 14 may be also determined depending on the fastening force required for the spacer parts. The fastening force required for the spacer parts is, for example, a stress of 1 kg/cm² (9.807 × 10⁴ Pa) or higher, and it is preferable to determine it together with the specification of the through bolts 46 so as to give the fastening stress. For example, in the case where through bolts 46 of M12 to M16 (made of SUS 304) are used, it is preferable to form through bolt insertion holes 14 with a diameter (circular) larger than that.of bolts by 0.5 to 3 mm at 100 to 1000 mm pitches in both spacer parts.

In Figs. 1 to 3, the width of the spacer parts 13 is even in the longitudinal direction (vertical direction at the time of use) of the membrane elements; however a form in which the width is made uneven is also preferably usable. As shown with L2 in Fig. 1, the width of the spacer parts means the length of the portion excluding the through bolt insertion holes 14 in the horizontal direction and in the membrane element plane direction.

Further, in the case where the load by the gas-liquid mixing flow is very high and the fastening force for the spacer parts has to be increased more, it is supposed to employ methods of increasing the number of the through bolts or widening the diameter of the through bolts; however in both cases, disadvantageous phenomena would be caused. In the case of increasing the number of the through bolts, there occur a problem of cost increase for the through bolts and a problem of complication in the assembling a membrane unit 42. In the case of widening the diameter of the through bolts to increase the fastening force, there also occur a problem that the cost is increased for the supporting plate since the width of the spacer parts has to be wide depending on the diameter of the bolts and a problem that it becomes difficult to evenly fasten the respective parts of the spacer parts since the area of the parts to be brought into contact with the adjacent membrane elements is widened.

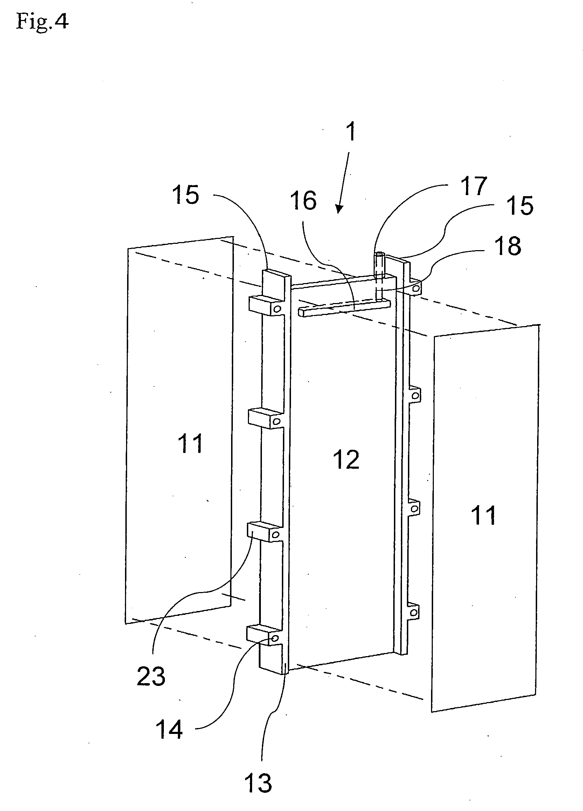

Therefore, in order to solve these problems, it is also preferable to form ribs 23 intermittently at the outside parts of the spacer parts 13 as shown in the membrane element 1 shown in Fig. 4 and to form the through bolt insertion holes 14 in the ribs 23. The ribs 23 may be produced integrally from the same material as that of other portions of the spacer parts 13. According to such a configuration, the fastening force can be maintained by inserting through bolts with a desired diameter and the area of the spacer parts can be narrowed, and thus the spacer parts can be evenly fastened to one another.

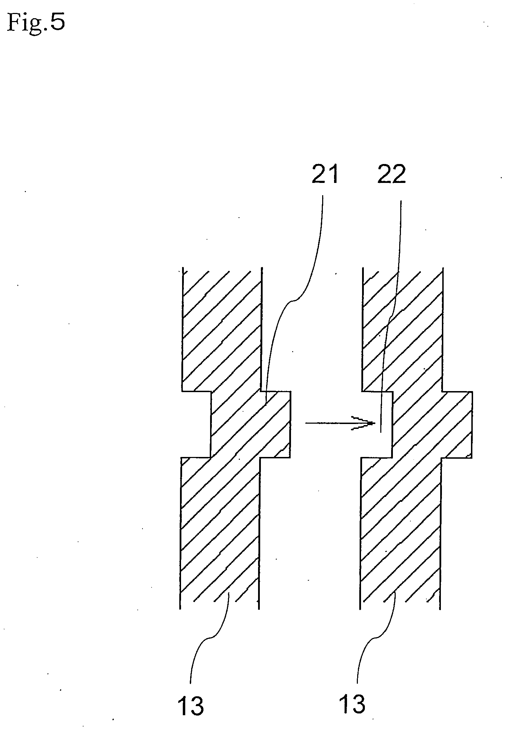

Further, it is also preferable to form projection parts 21 for fitting and reception parts 22 for fitting it in the spacer parts 13 as shown in the cross-sectional view of Fig. 5 so as to easily position at the time of arranging a plurality of membrane elements. The positioning of the through bolt insertion holes 14 is thus made easy and through bolts 46 can be easily inserted into a plurality of layered membrane elements.

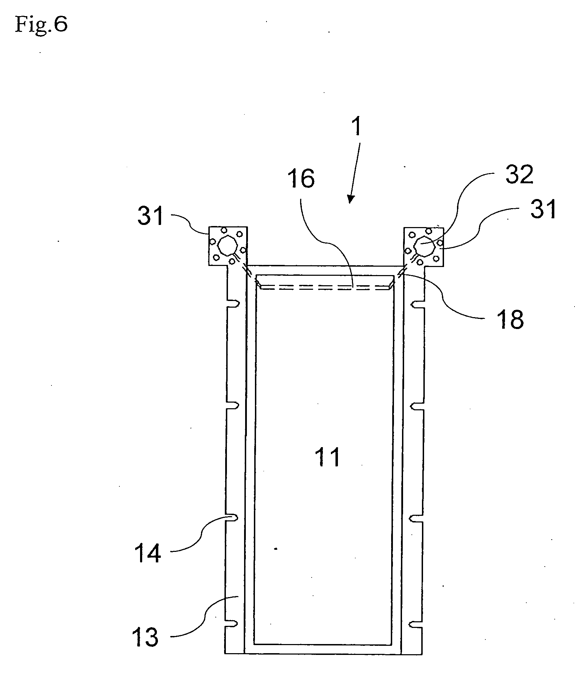

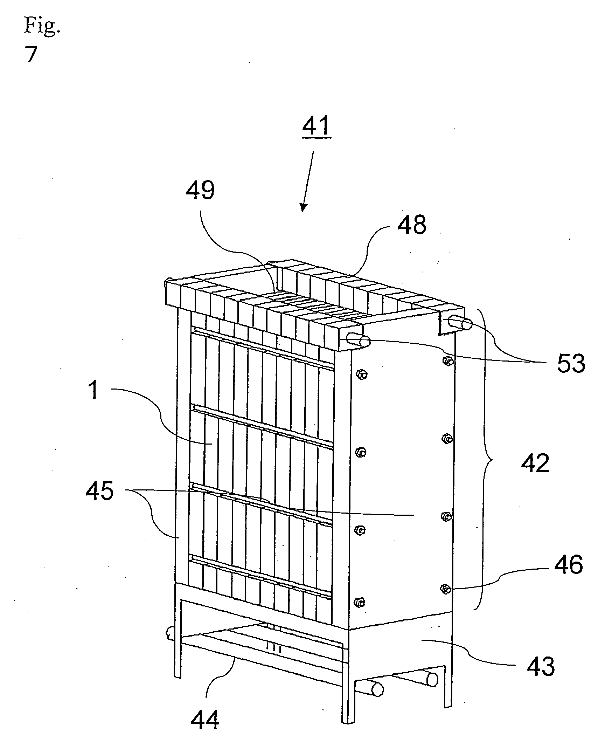

The extended parts 15 may have a structure formed simply by extending the spacer parts 13 upward higher than the upper end parts of the membrane elements 1 as shown in Fig. 1 or may be formed to have a shape different from other portions of the spacer parts 13 as shown in Fig. 6. In the embodiment shown in Fig. 6, the channel parts 31 are formed in the extended parts 15 corresponding to the upper parts of the spacer parts 13. In this case, the channel parts 31 have through holes 32 for forming water collecting pipes of filtered water in the approximately center in the thickness direction (in the arrangement direction of the membrane elements at the time of use) and are configured in such a manner that filtered water can flow from the filtered water chambers to the through holes 32 for forming a water collecting pipe via collecting grooves 16 and channels 18 formed at the supporting plates 12. The through holes 32 for forming the water collecting pipe form a continuous water collecting pipe when a membrane unit is assembled by arranging the membrane elements in such a manner that the channel parts thereof are brought into contact with one another as shown in Fig. 7.

The entire circumferential rim parts of the filtering membrane 11 are liquid-tightly fixed to the supporting plates 12 by means such as melt deposition, fusion, adhesion, or the like to partition the filtering membranes 11 in which the outer face is raw water side and the inner face is filtered water side. The filtering membranes 11 are not particularly limited, in the case of solid-liquid separation of activated-sludge water, a flat membrane type filtering membrane with a pore diameter determining the filtration capability of the filtering membranes 11 in a range of 0.01 to 20 µm is preferable.

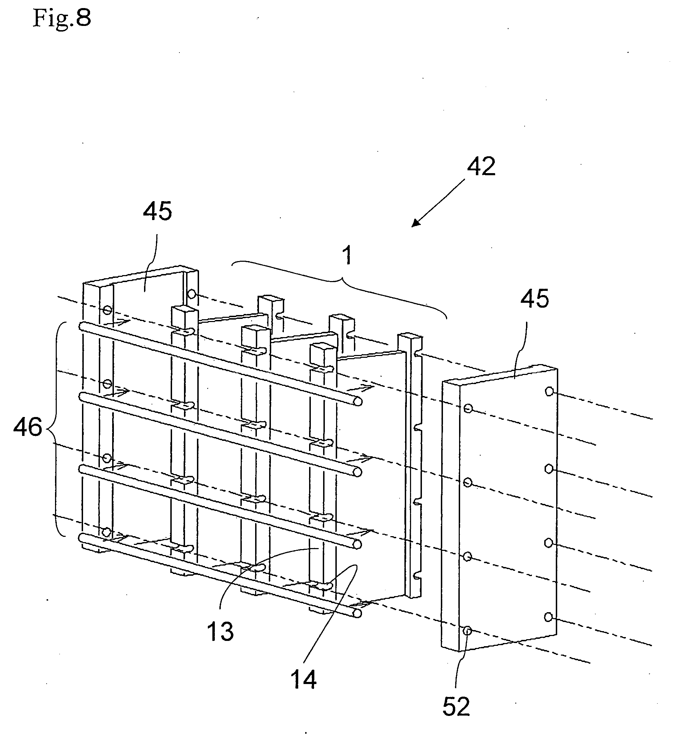

The membrane elements 1 composed of the above-mentioned parts are assembled to form membrane units shown in, for example, Figs. 2, 3, 7, and 8. Fig. 2 is a schematic perspective view showing one embodiment of a membrane module produced by combining a membrane unit using the membrane element shown in Fig. 1 with an air diffuser, Fig. 3 is a schematic top view thereof, Fig. 7 is a schematic perspective view showing one embodiment of a membrane module produced by combining a membrane unit using the membrane elements shown in Fig. 6 with an air diffuser, and Fig. 8 is a schematic drawing showing an integration method of the membrane elements 1 and the seal panels 45.

The membrane units 42 of the invention shown Figs. 2 and 7 are basically composed of a plurality of the membrane elements 1 as described above and the seal panels 45 installed to the outermost parts of these membrane elements 1, and through bolts 46 are optionally employed for integration. Herein, the outermost parts of a plurality of the membrane elements 1 mean both end parts in the membrane element arrangement direction.

The seal panels 45 are plate-like ones for covering the outermost parts of the arranged membrane elements 1, and in the case of integration by through bolts, through bolt insertion holes 52 are formed. Since the respective raw water channels 51 between membrane elements 1 are preferable to have approximately uniform width, it is preferable to install spacer parts to the both right and left side parts (the side brought into contact with the spacer parts 13 of the membrane elements) of the inner side faces of the seal panels 45 so as to form the raw water channels 51 with approximately same width between the membrane elements as shown in Fig. 3 also. A material for the seal panel 45 is not particularly limited and same materials as those of the supporting plates 12 can be properly selected.

The through bolts 46 are not particularly limited as long as they can integrate and fix the seal panels 45 and a plurality of membrane elements 1 by penetration. The number of the through bolts and the bolt diameter may be properly set depending on the fastening force and weight of the membrane unit 42. At the time of fixation of the through bolts 46, it is preferable to fix them by setting nuts 50 at both ends.

In the case of layering a plurality of membrane elements 1, while the spacer parts 13 of adjacent membrane elements are brought into contact with one another, the membrane elements are arranged, and in this case, the extended parts 15 are brought into contact with one another. Accordingly, the extended parts 15 of the spacer parts 13 form walls at the upper and two opposed side faces of the membrane unit. Further, the seal panels 45 are layered at the outermost parts of the membrane elements 1, and walls are formed at remaining two opposed side faces of the membrane unit by the upper parts of the seal panels 45 by using those having a shape covering the extended parts 15 for the seal panels 45. That is, a frame body 48 surrounding the space above the filtering membranes is formed by the extended parts 15 and the seal panels 45, and by the frame body 48, a space part 49 above the membrane elements 1 can be reliably retained. Accordingly, the speed of the gas-liquid mixing flow can be increased without installing upper housing, being an additional part, above the membrane elements.

In the case of using membrane elements having spacer parts 13 having the projection parts 21 for fitting and reception parts 22 for fitting it as shown in Fig. 5, a work of fitting the projection parts 21 for fitting of one membrane element with the reception parts 22 for fitting of an adjacent membrane element is simply repeated. Accordingly, the positioning of the through bolt insertion holes 14 can be carried out and the work for inserting the through bolts 46 to be carried out thereafter is made simple.

The membrane elements 1 and the seal panels 45 are united by the through bolts 46. At the time of uniting them, through bolts 46 are fitted into the through bolt insertion holes 14 of a plurality of the arranged membrane elements 1 from the side and then inserted into hole parts 52 of one seal panel 45. Thereafter, the membrane elements are moved to bring the spacer parts into contact with one another. After a prescribed number of membrane elements are arranged, the through bolts 46 are inserted into hole parts 52 of the other seal panel 45 and fixed by nuts 50. In such a manner, the membrane unit 42 can be assembled.

In the case where the through bolt insertion holes 14 are opened to the side face, the assembly space necessary for inserting the through bolts 46 into a plurality of the membrane elements 1 can be narrowed as compared with that in the case where the holes have a simple hole shape not opened to the side face, and further the through bolts 46 can be easily inserted. The more the number of the membrane elements 1 is increased, the more effect of saving the space is significant. In addition, the holes to be formed in the seal panels 45 are made simple circular holes not opened to the side, so that the through bolts 46 can be prevented from dropping by tremors during the operation.

At the time of uniting the membrane elements 1 and the seal panels 45, as shown in Fig. 8, after a plurality of membrane elements 1 are arranged in approximately vertical state to keep the surfaces of the filtering membranes 1 vertically, the through bolts 46 are fitted in the U-shape parts from the side, and thereafter, the through bolts 46 may be inserted into the hole parts 52 of the seal panels 45 to unit the membrane elements simultaneously with installation of them. Further, while one seal panel 45 is laid on a floor face, a plurality of membrane elements 1 are layered thereon and the through bolts 46 are fitted in the U-shape parts 14 and the hole parts 52 from the side, and the other seal panel 45 is finally layered on the uppermost membrane element 1 to unit them (not shown). In any case, the through bolts 46 can be inserted into the U-shape part 14 from a narrow space in the side of the membrane elements.

Further, in the case of the membrane unit as shown in Fig. 7, the channel parts 31 having through holes 32 for forming a water collecting pipe are brought into contact with one another to communicate the through holes 32 and form the water collecting pipe, and the water collecting pipe is provided with a function as a water collecting conduit for collecting the filtered water coming out of a plurality of the membrane elements 1. At the time of bringing the channel parts 31 of the spacer parts, the adjacent channel parts 31 may be stuck and sealed; however it is more preferable to insert O-rings, gaskets, liquid-type gaskets or the like between the respectively channel parts 31 and to fasten and seal them with through bolts 46. Further, water collecting caps 53 for taking collected filtered water out are preferably installed at positions corresponding to the channel parts 31 in the both outmost parts of a plurality of membrane elements 1. Accordingly, collecting pipes 85 and tubes 86, as shown in Fig. 12, which are required for prior arts are no more needed, and installation of the membrane module 41 can be advantageously carried out in a space saving manner. Further, at the time of operation, due to the air discharged from the air diffuser 44, upward gas-liquid mixing flow is generated in the membrane module and on the other hand, downward flow of wastewater is generated in the outside of the membrane module. In the case of the configuration as shown in Fig. 7, since inhibition of the upward flow by a tube or inhibition of the downward flow by a collecting pipe does not occur, even flow in right and left can be advantageously generated without decreasing the speed of the gas-liquid mixing flow,.

The membrane unit 42 assembled in such a manner is used as a membrane module 41 by installing the air diffuser 44 for jetting air under the unit. The air diffuser 44 may be fixed in a stand 43 mounting the membrane unit 42 thereon as shown in Fig. 2 and Fig. 7, or may be installed separately. The installation and configuration of the diffuser 44 are not also particularly limited; the installation may be proper to evenly send air to a plurality of the membrane elements and the configuration may be proper to have air diffusion holes. As one example, a plurality of pipes are installed under the membrane elements 1 and air diffusion holes are formed at constant intervals in the upper faces or lower faces of the pipes. The number and the size of the holes as the air diffusion holes are not particularly limited and may be properly set depending on the air amount.

As shown in Fig. 2, it is also preferable to set a lower frame body 47 under the membrane unit 42 between the stand 43 and the membrane unit. Installation stability of the membrane unit 42 can be increased by mounting the membrane unit 42 on the lower frame body 47 and then on the stand 43. That is, in the case where the lower frame body 47 is installed, when the membrane unit 42 is hung up, a problem that the arranged membrane elements are displaces or the through bolts 46 are loosened can be solved. The lower frame body 47 is preferable to have a structure to be fixed by bolts under the seal panels 45. Further, the lower frame body 47 is preferable to have a shape having an open space just under the membrane elements not so as to inhibit the raw water channel 51.

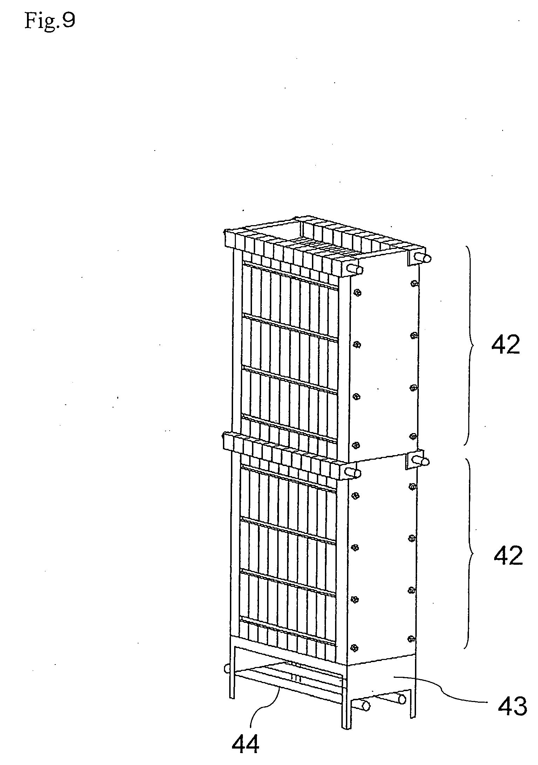

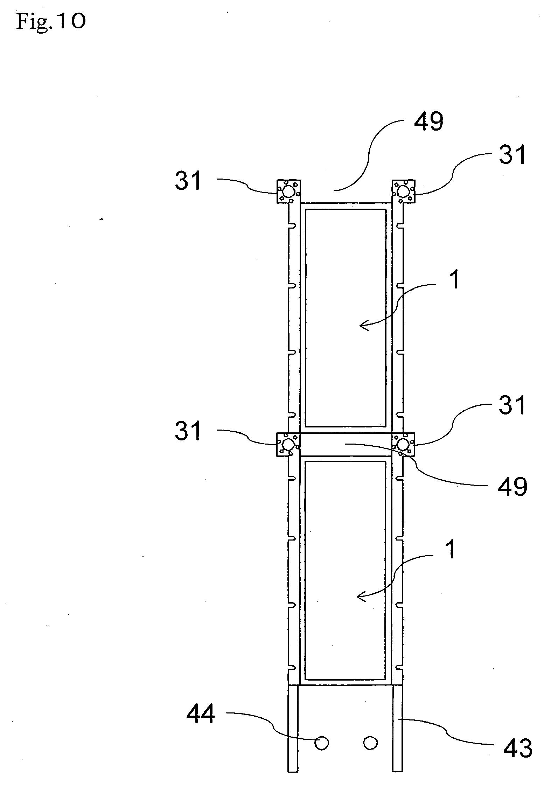

As shown in Fig. 9, a plurality of the membrane units of the invention may be layered vertically in multi-decks. In this case, the space part 49 surrounded with the frame body 48 composed of the extended parts 15 of the spacer parts 13 and the seal panels 45 is formed on the upper part of each membrane unit 42. That is, as shown in Fig. 10 (cross-sectional view of Fig. 9), without installation of a conventionally used upper housing 84 (see Fig. 13), the space part 49 can be formed between an upper and a lower membrane units. In the case of a conventional module 81 of multi-deck membrane units as shown in Fig. 13, since the module has a configuration that the filtered water flowing out of the lower-deck membrane unit 82 is collected to a collecting pipe 85 via a tube 86, a drilling work for opening a hole for passing the tube 86 to the upper housing 84 is necessary; however, in the case of the multi-deck membrane unit structure using the membrane elements 1 as shown in Fig. 6, such a drilling work is not required and the installation space for the collecting pipes 85 and 85' (see Fig. 13) is also no more needed, so that the treatment tank can be advantageously made compact. In order to increase the height of the space part above the membrane unit, another housing (not shown) may be installed between the lower-deck membrane unit and the upper-deck membrane unit. Even in the case of installing another housing, the upper housing can be made to have a lower height than that of a conventional one.

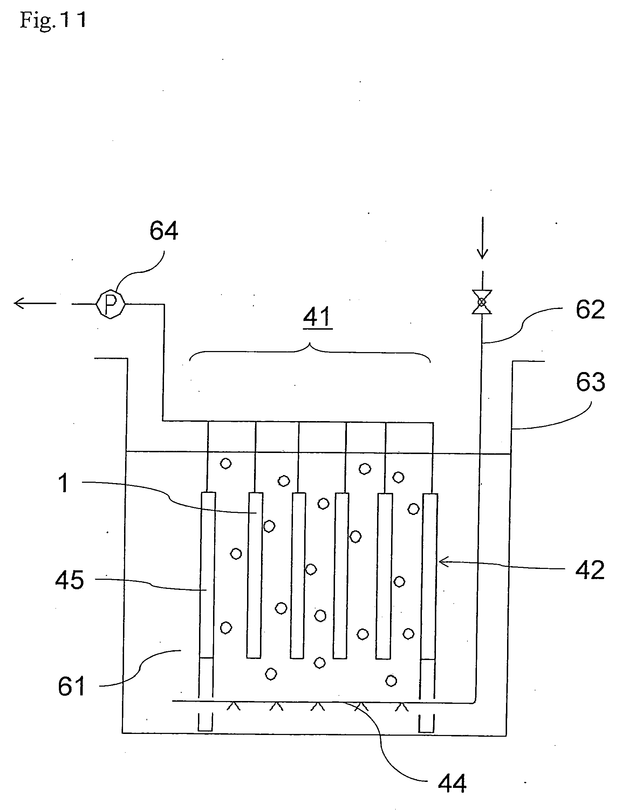

As shown in Fig. 11, the membrane module 41 is used while being immersed in a treatment tank 63 storing water 61 to be treated. The membrane module 41 is immersed in the treatment tank 63 storing the water 61 to be treated, a suction pump 64 for suctioning the filtered water is connected to the membrane module 41, and a pipe 62 for supplying air is connected to the air diffuser 44. In Fig. 11, the suction pump 64 is used for taking the filtered water out of membrane unit 42; however, additionally, gravity filtration may be carried out using head difference between the water surface in the treatment tank 63 and the part where filtered water is taken out.

In the water treatment apparatus configured in such a manner, the water 61 to be treated such as wastewater is passed through the filtering membranes installed in the membrane elements 1 by suctioning force of the pump. In this time, microorganism particles and suspended solid such as inorganic particles or the like contained in the water 61 to be treated can be filtered and remain in the water 61 side. The water passing through the filtering membranes (filtered water) is taken outside of the treatment tank 63 from the spaces (filtered water chambers) between the supporting plates and filtering membranes via the water collecting pipes and the like. On the other hand, simultaneously with the membrane filtration, air is jetting from the air diffuser 44 and enters to the raw water channels of the membrane units. The ascending gas-liquid mixing flow parallel to the membrane faces of the membrane elements 1 generated by ascending air separates the filtered matter deposited on the membrane faces and washes the membrane faces.

### INDUSTRIAL APPLICABILITY

The membrane elements and membrane units of the invention can be used in the case of water filtration treatment while being installed in a treatment tank and can be utilized for wastewater treatment and water purification treatment.

## Claims

1. A membrane element comprising filtering membranes on both surfaces of a plate-like supporting plate, wherein spacer parts are formed at both side parts of the membrane element for keeping prescribed distance to the surface of an adjacent membrane element, and the spacer parts have through bolt insertion holes and are extended upward from the upper end part of the supporting plate.

2. The membrane element according to claim 1, wherein the through bolt insertion holes are U-shape holes opened to the side face of the membrane element and penetrating form the front surface to the rear surface of the membrane element.

3. The membrane element according to claim 1 or 2, wherein projection part for fitting and reception part for fitting are formed in the spacer part for positioning with an adjacent membrane element.

4. The membrane element according to any one of claims 1 to 3, wherein a channel part having a through hole for forming a water collecting pipe is formed in the upper part of the spacer part and the through hole in the channel part and the inside of a filtered water chamber formed by the filtering membranes disposed on both surfaces of the supporting plate are communicated.

5. A membrane unit comprising a plurality of membrane elements according to any one of claims 1 to 4 arranged in such a manner that the spacer parts are brought into contact with each other, seal panels are installed to the outermost parts of the arranged membrane elements, and a frame body surrounding the space above the filtering membranes is formed by the spacer parts and the seal panels.

6. A membrane unit comprising a plurality of membrane elements according to claim 2 arranged in such a manner that the spacer parts are brought into contact with each other, and seal panels having through bolt insertion holes are installed to the outermost parts of the arranged membrane elements, wherein the membrane elements and the seal panels are united by inserting through bolts into the U-shape holes of the membrane elements and the through bolt insertion holes of the seal panels.

7. A membrane unit comprising a plurality of membrane elements according to claim 4 arranged in such a manner that the channel parts formed in the spacer parts are brought into contact with each other, seal panels are installed to the outermost parts of the arranged membrane elements, a frame body surrounding the space above the filtering membranes is formed by the spacer parts and the seal panels, and a water collecting pipe is formed by bringing a plurality of the channel parts into contact with one another.

8. A multi-deck membrane unit comprising the membrane unit apparatus according to any one of claims 5 to 7 layered vertically in multi-decks.
